# EUROPÄISCHE PATENTSCHRIFT

(11) **EP 3 389 993 B1**
(45) Veröffentlichungstag und Bekanntmachung des Hinweises auf die Patenterteilung: **02.11.2022**
(21) Anmeldenummer: 16809416.7
(22) Anmeldetag: 14.12.2016
(51) Int. Cl.: B29C 65/08

(54) **VERFAHREN UND VORRICHTUNG ZUM VERBINDEN VON FASERVERSTÄRKTEN BAHNKÖRPERN**
METHOD AND DEVICE FOR CONNECTING FIBRE-REINFORCED WEBS
PROCÉDÉ ET DISPOSITIF D'ASSEMBLAGE D'ÉLÉMENTS DE BANDE RENFORCÉS DE FIBRES

(30) Priorität: 17.12.2015 EP 15200659
(43) Veröffentlichungstag der Anmeldung: 24.10.2018
(73) Patentinhaber: Covestro Intellectual Property GmbH & Co. KG, 51373 Leverkusen (DE)
(72) Erfinder: KNAUPP, Matthias, 40764 Langenfeld (DE); GRIMM, Thomas, 50765 Köln (DE); BOERGER, Henning, 91459 Markt Erlbach (DE)
(74) Vertreter: Levpat
(86) Internationale Anmeldenummer: PCT/EP2016/080921
(87) Internationale Veröffentlichungsnummer: WO 2017/102806

(56) Entgegenhaltungen:
- WO-A2-2014/088704
- DE-A1-102014 101 503
- JP-A- H11 333 935
- US-A1- 2014 286 697

## Beschreibung

Gegenstand der vorliegenden Erfindung ist ein Verfahren und eine Vorrichtung zum Verbinden von faserverstärkten Bahnkörpern mittels Ultraschallschweißen. Gegenstand der vorliegenden Erfindung ist auch ein faserverstärkter Bahnkörper, der zum Verbinden mit anderen gleichartigen Bahnkörpern mittels Ultraschallschweißen geeignet ist.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der eine Matrix aufweist, in der Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer, Basalt-, oder Naturfasern zum Einsatz kommen. Als Matrix werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv.

Thermoplastbasierte Verbundwerkstoffe hingegen werden häufig, soweit sie als bereits vollkonsolidierte Halbzeuge vorliegen, z.B. als endlosfaserverstärkte Platten oder Profile, bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Die Fasern sind in aller Regel mit einer sogenannten Schlichte beschichtet. Wird ein Thermoplast als Matrix verwendet, so enthalten geeignete Schlichtsysteme für die Schlichte einen Duroplasten, ein Silan, ein Epoxidharz oder ein Polyurethan. Es ist aber auch möglich, dass die Fasern oder ein Teil der Fasern keine Schlichte aufweisen.

Als Verstärkungsmaterial werden vielfach Textilhalbzeuge wie Gewebe, Gestricke, Gewirke, mehrlagige Gelege oder Non-wovens (z.B. Vliese, Wirrfasermatten etc.) verwendet. Diese Formen der Faserverstärkung zeichnen sich dadurch aus, dass bereits im Textilhalbzeug die Ausrichtung der Faser - und somit der Kraftpfade im späteren Bauteil - festgelegt ist. Dies ermöglicht die direkte Herstellung eines multidirektional verstärkten Verbundwerkstoffes.

Neben diesen bereits etablierten Systemen auf Basis von Textilhalbzeugen gewinnen bahnförmige thermoplastbasierte faserverstärkte Halbzeuge zunehmend an Bedeutung. Diese bieten Vorteile in der Wirtschaftlichkeit, da der Prozessschritt der Textilhalbzeugherstellung eingespart werden kann. Diese thermoplastbasierten faserverstärkten Halbzeugbahnen eignen sich zur Herstellung von mehrlagigen Aufbauten, insbesondere auch zur Herstellung von multidirektionalen Aufbauten.

Ein Verfahren und eine Vorrichtung zur Herstellung einer thermoplastbasierten Halbzeugbahn, die mit unidirektional ausgerichteten Endlosfasern verstärkt ist, sind in WO 2012 123 302 A1, deren Offenbarung hiermit vollumfänglich in die Beschreibung der vorliegenden Erfindung mit einbezogen wird, beschrieben. Mit dem offenbarten Verfahren bzw. mit der offenbarten Vorrichtung wird eine faserverstärkte Halbzeugbahn erhalten, bei der die Endlosfasern in 0°-Richtung zur Laufrichtung der Vorratsbahn ausgerichtet sind.

Ein Verfahren und eine Vorrichtung zur Herstellung einer thermoplastbasierten Halbzeugbahn, die mit unidirektional ausgerichteten Endlosfasern verstärkt ist, sind auch in EP 2 631 049 A1, deren Offenbarung hiermit ebenfalls vollumfänglich in die Beschreibung der vorliegenden Erfindung mit einbezogen wird, beschrieben.

Dabei weist der Gegenstand der EP 2 631 049 A1 die Besonderheit auf, dass aus einer Vorratsbahn, bei der die Endlosfasern in 0°-Richtung zur Laufrichtung der Vorratsbahn ausgerichtet sind, eine Halbzeugbahn hergestellt wird, in der die Fasern unidirektional in einer Richtung ungleich 0° zur Laufrichtung der Halbzeugbahn ausgerichtet sind.

Bei dem in EP 2 631 049 A1 offenbarten Verfahren werden zur Herstellung der fertigen Halbzeugbahn, also der Bahn, bei der die Fasern unidirektional in einer Richtung ungleich 0° zur Laufrichtung der Halbzeugbahn ausgerichtet sind, von einer Vorratsbahn, die eine Hauptrichtung, eine Kunststoffmatrix und eine Vielzahl von unidirektional gerichtet festgelegten Fasern aufweist, die einen Winkel gleich 0° mit der Laufrichtung einschließen, Segmente abgetrennt, diese Segmente nebeneinander angeordnet, so dass ihre parallel zur Laufrichtung verlaufenden Längskanten parallel zueinander und benachbart sind und den vorbestimmten Winkel mit der Längsrichtung einschließen, und benachbarte Segmente im Bereich ihrer Längskanten miteinander verbunden.

Die in EP 2 631 049 A1 offenbarte Vorrichtung umfasst eine Spenderanordnung zum Ausgeben von Segmenten der Vorratsbahn, die eine Hauptrichtung, eine Kunststoffmatrix und eine Vielzahl von unidirektional gerichtet festgelegten Fasern aufweisen, die einen Winkel gleich 0° mit der Hauptrichtung einschließen, eine Ausrichteinrichtung zum Anordnen der Segmente nebeneinander, so dass ihre parallel zur Hauptrichtung verlaufenden Längskanten parallel zueinander und benachbart sind und einen vorbestimmten Winkel (a) mit der Längsrichtung einschließen, und eine Verbindungseinrichtung zum Verbinden der benachbarten Segmente im Bereich ihrer Längskanten.

Ein geschwindigkeitsbestimmender Schritt bei der Herstellung der Halbzeugbahn ist das Verbinden der von der Vorratsbahn abgeschnittenen Bahnstücke, in der EP 2 631 049 A1 Segmente genannt, zur fertigen Halbzeugbahn.

Nachfolgend werden die Vorratsbahn, die Bahnstücke und die fertige Halbzeugbahn zusammenfassend auch Bahnkörper genannt.

In der EP 2 631 049 A1 wird unter anderem vorgeschlagen, dieses Verbinden mittels Verkleben oder Verschweißen durchzuführen. Als Schweißmethode schlägt EP 2 631 049 A1 unter anderem Ultraschallschweißen vor.

Ultraschallschweißen an sich ist bekannt. Es ist ein Reibschweißverfahren, bei dem die Verschweißung durch eine hochfrequente mechanische Schwingung im Bereich von in der Regel 20 bis 35 kHz erreicht wird, welche zwischen den Bauteilen zu Erwärmung durch Molekular- und Grenzflächenreibung führt.

Mit Hilfe eines Generators wird hochfrequenter Wechselstrom erzeugt und über ein Koaxialkabel zu einem Ultraschallwandler, dem sogenannten Konverter, übertragen, der daraus mit Hilfe des piezoelektrischen oder des magnetostriktiven Effekts eine mechanische Ultraschallschwingung erzeugt. Diese Schwingungen werden über ein Amplitudentransformationsstück auf eine Sonotrode übertragen. Unterschiedliche Anwendungen erfordern unterschiedliche Bauformen von Sonotroden, die meist aus Stahl, Aluminium oder Titan hergestellt werden, ihre Geometrie ist abhängig von der durch den eingesetzten Generator bereitgestellten Frequenz und von der Bearbeitungsaufgabe.

Die Sonotroden sind Werkzeuge, die durch das Einleiten von hochfrequenten mechanischen Schwingungen, also auch Ultraschall, in Resonanzschwingungen versetzt werden. Sie stellen die Verbindung vom Ultraschallgenerator zum Werkstück her und passen die Ultraschallschwingung an die Bearbeitungsaufgabe an. Sonotroden werden beim Ultraschallschweißen eingesetzt, um in den Füge- oder Kontaktzonen auf Grund verschiedener Prozesse eine dauerhafte Verbindung der Bauteile herzustellen. Als Widerlager dient der Sonotrode ein Amboss.

Die Sonotrode und der Amboss haben als einzige Bauteile einer Ultraschall-Schweißmaschine direkten Kontakt zum zu verschweißenden Teil. Ihre Arbeitsflächen müssen deshalb so gestaltet sein, dass die Ultraschallschwingungen optimal in die Fügezone eingeleitet werden und Abdrücke auf den zu verschweißenden Teilen vermieden werden. Die mechanischen Schwingungen werden senkrecht in die Fügezonen des zu verschweißenden Teils eingeleitet.

Beim Schweißen von Kunststoff wird die Schwingung in der Regel senkrecht zu den Fügepartnern eingeleitet. Dieser erhitzt sich und beginnt zu erweichen, wodurch der Dämpfungskoeffizient ansteigt. Die Zunahme des Dämpfungskoeffizienten führt zu höherer innerer Reibung, was die Temperaturerhöhung weiter beschleunigt. Die aufgeschmolzenen Werkstoffe verbinden sich und sind nach dem Abkühlen und Erstarren miteinander verschweißt.

Neben punktförmigen Schweißungen sind mit Rollnaht-Sonotroden auch Nahtschweißungen möglich, insbesondere auch auf kontinuierlich Weise.

Ultraschallschweißen ist durch sehr geringe Schweißzeiten und hohe Wirtschaftlichkeit gekennzeichnet. Es lassen sich gleiche und unterschiedliche Materialien miteinander verbinden, die Werkstücke werden nur im Schweißbereich geringfügig erwärmt, das umliegende Material somit nicht geschädigt.

Maschinen zum Ultraschallschweißen werden beispielsweise durch die Firma Nucleus GmbH, Düsseldorf, entwickelt und vertrieben. Eine solche Maschine ist beispielsweise die ROTOSONIC V4E.

Jedoch gestaltet sich das Ultraschallschweißen von thermoplastbasierten faserverstärkten Bahnköpern wie den in der EP 2 631 049 A1 genannten Segmenten in der Praxis sehr schwierig. Dies kann unter anderem dem Artikel "Advances in fusion bonding techniques for joining thermoplastic matrix composites: a review" (C. Ageorges, L. Ye, M. Hou, in: Composites: Part A 32 (2001) 839-857) entnommen werden. Dort wird auf das Problem hingewiesen, dass auf Grund des Fasergehalts weniger schmelzbares Material zur Verfügung steht, was das Herstellen einer stoffschlüssigen Verbindung erschwert. Schon in diesem Artikel wird als Lösung vorgeschlagen, dass die zu verbindenden Bahnköperübereinander angeordnet werden und dann unter Druck ultraschallverschweißt werden.

Auch DE 10 2008 059 142 A1 offenbart das Ultraschallverschweißen von thermoplastbasierten faserverstärkten Bahnköpern. Auch hier werden die Bahnköperübereinander gelegt und Druck ausgeübt, um die Verschweißung durchführen zu können.

Auch DE 10 2014 101503 A1 offenbart eine Vorrichtung zum Ultraschallschweißen von Materialbahnen, aufweisend eine Sonotrode und ein Gegenwerkzeug zu dieser Sono-trode. Jedoch werden mit der Vorrichtung gemäß DE 10 2014 101503 A1 die Materialbahnen flächig miteinander verbunden, und nicht auf Stoß miteinander verbunden, so dass es zumindest an der Schweißnaht immer eine Überlappung gibt.

Sowohl die Vorgehensweise nach DE 10 2008 059 142 A1 als auch die Vorgehensweise nach DE 10 2014 101503 A1 haben den Nachteil, dass die Bahnköper nach der Verschweißung Unebenheiten und/oder Verdickungen aufweisen, nämlich dort, wo die Bahnköper überlappten. Solche Bahnköper sind für Anwendungen, für die eine ebene Oberfläche gefordert ist, nicht mehr brauchbar.

Ein weiterer Nachteil ist der zusätzliche Materialverbrauch, der für die Überlappung nötig ist. Auch ist zur Herstellung der Überlappung ein zusätzlicher apparativer Aufwand nötig, was zusätzlich nachteilig ist.

So werden in den oben aufgeführten Dokumenten auch keine Bahnkörper mit dem Thermoplasten Polycarbonat als Matrixmaterial hergestellt.

Das gilt auch für JP H11 333935 A, die ebenfalls eine Vorrichtung aufweisend eine Sonotrode und ein Gegenwerkzeug zu dieser Sonotrode offenbart.

Polycarbonate haben gegenüber den üblicherweise eingesetzten thermoplastischen Kunststoffen den Nachteil, dass sie wenig Veranlagung zum Kriechen aufweisen und somit bei konstanter Spannung zu Rissbildung neigen. Dies ist besonders beim Einsatz in Verbundwerkstoffen, die Endlosfasern enthalten, höchst problematisch; denn Verbundwerkstoffe, die in ihrer Kunststoffmatrix Endlosfasern enthalten, stehen durch die Endlosfasern unter einer konstanten Spannung. Aus diesem Grund spielten Polycarbonate in der Praxis als Kunststoffmatrix für solche Endlosfasern enthaltenden Verbundwerkstoffe bisher nur eine untergeordnete Rolle. Grundsätzlich ist es jedoch wünschenswert, das Einsatzgebiet von Polycarbonaten auch auf die unidirektional faserverstärkten Bahnkörper auszuweiten, denn Polycarbonate weisen gegenüber den anderen üblichen thermoplastischen Kunststoffen, wie Polyamid oder Polypropylen, einen geringeren Volumenschwund beim Erstarren auf. Ferner weisen Polycarbonate im Vergleich zu anderen Thermoplasten eine höhere Glasübergangstemperatur Tg, eine höhere Wärmeformbeständigkeit auf.

Mit Bahnen, die aus unidirektional faserverstärkten Bahnkörpern mit Polycarbonat als Matrixmaterial hergestellten wurden, ist es darüber hinaus möglich, einen Mehrschichtverbund bereit zu stellen, der eine ästhetisch ansprechende Oberfläche mit geringer Welligkeit mit gleichzeitig guten mechanischen Eigenschaften aufweist. So ein aus Bahnen mit Polycarbonat als Matrixmaterial aufgebauter Mehrschichtverbundwerkstoff weist eine metallähnliche Haptik, Optik und Akustik auf.

Mit diesen Eigenschaften ist ein solcher Mehrschichtverbundwerkstoff auch als Gehäusematerial für Gehäuse für elektronische Geräte, insbesondere portable elektronische Geräte wie Laptops oder Smartphones, für die Außenbeplankung sowie für Interieurblenden von Automobilen und geeignet, da ein solcher Mehrschichtverbundwerkstoff sowohl mechanische Last aufnehmen kann als auch ein hervorragendes äußeres Erscheinungsbild bietet.

In der US2014286697A1 wird ein Verfahren zum Verschweißen von thermoplastbasierten faserverstärkten Bahnköpern offenbart, bei dem die Bahnkörper nicht überlappen. Der Thermoplast kann dabei Polycarbonat sein, die Fasern sind Endlosfasern oder Kurzfasern und ungerichtet verteilt. Jedoch ist aus Fig. 3 von US2014286697A1 deutlich zu sehen, dass im Bereich der Schweiß deutliche Unebenheiten und Verdickungen auftreten. US2014286671 A1 gibt keine Auskunft über die Position der Sonotrode oder des Ambosses während des Ultraschallschweißvorgangs.

WO 2014/088704 A2 offenbart einen Mehrschichtverbundwerkstoff. Jedoch braucht der in WO 2014/088704 A2 offenbarte Mehrschichtverbundwerkstoff einen amorphthermoplastische Klebstoff zum Zusammenhalt. Außerdem gibt WO 2014/088704 A2 keinerlei Hinweis, dass die dort offenbarte Mehrschichtverbundwerkstoff aus mit unidirektional ausgerichteten Endlosfasern verstärkten Bahnkörpern, bei denen die Fasern in einer Matrix aus Polycarbonat eingebettet sind, aufgebaut ist.

Aufgabe der vorliegenden Erfindung ist es, die Nachteile des Stands der Technik zu überwinden. Insbesondere Aufgabe der vorliegenden Erfindung ist es, ein Verfahren und eine Vorrichtung zur Verfügung zu stellen, mit der mit unidirektional ausgerichteten Endlosfasern verstärkte Bahnköper, bei denen die Fasern in einer Matrix aus Polycarbonat eingebettet sind, mittels Ultraschallschweißen stoffschlüssig miteinander verbunden werden können, ohne dass die Bahnköper einander überlappen. Eine weitere Aufgabe der vorliegenden Erfindung ist es, einen mit unidirektional ausgerichteten Endlosfasern verstärkten Bahnköper, bei dem die Fasern in einer Matrix aus Polycarbonat eingebettet sind, zur Verfügung zu stellen, das mittels Ultraschallschweißen mit einem anderen gleichartigen mit unidirektional ausgerichteten Endlosfasern verstärkten Bahnköper, bei dem die Fasern in einer Matrix aus Polycarbonat eingebettet sind, stoffschlüssig verbunden werden kann.

Unter gleichartig ist in diesem Zusammenhang zu verstehen, dass der zu verbindenden Bahnkörper sowohl stofflich als auch strukturell gleichartig sind.

Die Bahnkörper sollen nach der Verschweißung keine Unebenheiten oder Verdickungen aufweisen.

Gelöst wird die Aufgabe durch die Gegenstände der unabhängigen Ansprüche. Vorzugsweise Ausgestaltungen finden sich in den Unteransprüchen.

Im Sinne der vorliegenden Erfindung bedeutet "stoffschlüssig verbunden", dass die durch Ultraschallschweißen hergestellte Verbindung an einer belieben Stelle dieser Verbindung bezüglich Zugfestigkeit und Bruchdehnung (beide z.B. ermittelt durch Zugversuch) Werte aufweist, die mindestens 50 %, bevorzugt 70 %, besonders bevorzugt 90 % der Zugfestigkeit und Bruchdehnung aufweisen, wie den Bahnkörper an einer beliebigen anderen Stelle, wobei die Werte für die Zugfestigkeit und Bruchdehnung an der durch Ultraschallschweißen hergestellten Verbindung und der beliebigen anderen Stelle des Bahnkörpers in gleicher Art und Weise ermittelt werden. Ausgenommen von den beliebigen Stellen sowohl bei der durch Ultraschallschweißen hergestellte Verbindung als auch bei der anderen Stelle des Bahnkörpers sind dabei Bereiche, die bezogen auf die großen Flächen des Bahnkörpers, also die Ober- und Unterseite des Bahnkörpers, innerhalb eines Randbereichs von 10 mm liegen.

Insbesondere gelöst wird die Aufgabe durch ein Verfahren zum Verbinden von zwei mit unidirektional ausgerichteten Endlosfasern verstärkten Bahnkörpern durch Ultraschallschweißen, wobei die Fasern in einer Matrix aus Polycarbonat eingebettet sind, das durch folgende Schritte gekennzeichnet ist:
(1) Anordnen der Bahnkörper auf Stoß nebeneinander in einer Schweißvorrichtung,
(2) Verschweißen der Bahnkörper mittels Ultraschall,
(3) Entfernen der miteinander verschweißten Bahnkörper aus der Schweißvorrichtung
wobei das Verfahren weiter dadurch gekennzeichnet ist, dass
die Bereiche der Bahnkörper, die miteinander verschweißt werden, einen geringeren Gehalt an Fasern aufweisen, als die übrigen Bereiche der Bahnkörper, wobei die Bereiche der Bahnkörper, die miteinander verschweißt werden, bevorzugt die Hälfte oder weniger, besonders bevorzugt ein Fünftel oder weniger, ganz besonders bevorzugt ein Zehntel oder weniger, insbesondere ein Hundertstel oder weniger des Fasergehalts der übrigen Bereiche der Bahnkörper aufweisen und die Bereiche der Bahnkörper, die miteinander verschweißt werden, im Bereich der Stoßkanten liegen und 0,1 mm bis 3 mm, bevorzugt 0,2 mm bis 2 mm, besonders bevorzugt 0,5 mm bis 1 mm tief sind, gemessen senkrecht zur Stoßkante in den Bahnkörper hinein.

Dabei bedeutet der Begriff "auf Stoß" im Sinne der vorliegenden Erfindung, dass die Bahnkörper je mit einer ihrer schmalen Seitenflächen so nebeneinander angeordnet werden, dass diese Seitenflächen parallel zueinander liegen und sich berühren. Vorzugsweise berühren sich die Seitenflächen der Bahnkörper im Wesentlichen vollflächig. Unter "im Wesentlichen vollflächig" in diesem Zusammenhang wird verstanden, dass bezogen auf mindestens eine der beiden Seitenflächen, diese zu mindestens 90 %, bevorzugt zu mindestens 95 %, besonders bevorzugt zu mindestens 98 %, ganz besonders bevorzugt zu mindestens 99 %, von der andern Seitenfläche abgedeckt ist. Für den Fall, dass es sich um gleichartige Bahnkörper handelt, wie es die Regel ist, gilt das dann für beide Seitenflächen gleichermaßen. Der Begriff "auf Stoß" im Sinne der vorliegenden Erfindung schließt aus, dass die Bahnkörper einander überlappen.

Diese Seitenflächen werden nachfolgend auch als Stoßkanten bezeichnet.

Zum Erhalt einer stoffschlüssigen Verbindung ohne Überlappung der Bahnkörper ist es dabei vorteilhaft, dass die Bahnkörper Stoßkanten aufweisen, die im Wesentlichen rechteckig und im Wesentlichen eben sind. Dies stellt sicher, dass die Bahnköper nach der Verschweißung keine Unebenheiten oder Verdickungen aufweisen.

Dabei wird im Sinne der vorliegenden Erfindung unter "im Wesentlichen rechteckig" verstanden, dass mindestens 90 %, bevorzugt mindestens 95 %, besonderes bevorzugt mindestens 98 % der Stoßkantenfläche innerhalb eines Rechtecks liegt und mindestens 90 %, bevorzugt mindestens 95 %, besonders bevorzugt mindestens 98 % dieser Rechteckfläche von der Stoßkantenfläche ausgefüllt ist. Dabei beträgt die größte lineare Ausdehnung der Teile der Stoßkantenfläche, die aus dem Rechteck herausragen, also der Ausbuchtungen, jeweils maximal 10 %, bevorzugt maximal 5 %, besonders bevorzugt maximal 2 %, der Höhe des Rechtecks, wobei diese Ausdehnung jeweils senkrecht zu der Seite des Rechtecks bestimmt wird, aus der die Ausbuchtungen am stärksten herausragen. Die größte lineare Ausdehnung der Einbuchtungen in der Stoßkantenfläche, die in das Rechteck hineinragen, beträgt jeweils maximal 10 %, bevorzugt maximal 5 %, besonders bevorzugt maximal 2 %, der Höhe des Rechtecks, wobei diese Einbuchtung jeweils senkrecht zu der Seite des Rechtecks bestimmt wird, in die die jeweiligen Einbuchtungen am stärksten hineinragen. Das Rechteck ist in einem Winkel von 85° bis 95°, bevorzugt von 88° bis 92°, besonders bevorzugt von 89° bis 91°, ganz besonders bevorzugt senkrecht zur größten Fläche des Bahnteilstücks bzw. der Bahn ausgerichtet. Das Verhältnis von Breite zu Höhe des Rechtecks beträgt bevorzugt 50 : 1 oder größer, besonders bevorzugt 100:1 bis 100.000:1, insbesondere 150 : 1 bis 30.000 : 1.

Die Breite des Rechtecks entspricht im Rahmen der oben genannten Abweichungen der Seitenlänge des Bahnkörpers an dieser Stelle und die Höhe des Rechtecks entspricht im Rahmen der oben genannten Abweichungen der Dicke des Bahnkörpers an dieser Stelle.

Dabei beträgt die Breite vorzugsweise von 60 bis 2100mm, bevorzugt von 500 bis 1000 mm, besonders bevorzugt von 600 bis 800 mm, und die Dicke vorzugsweise von 100 bis 350 µm, bevorzugt von 120 bis 200 µm. Jedoch können mit dem erfindungsgemäßen Verfahren auch andere Bahnkörper mit anderen Breiten und Dicken verarbeitet werden, insbesondere können auch Bahnkörper mit Dicken bis 1.000 µm und sogar darüber, beispielsweise bis 1.200 µm, oder gar bis 1.500 µm, oder sogar bis 2.000 µm verarbeitet werden; das heißt auch bei Bahnkörpern mit diesen Dicken können mit dem erfindungsgemäßen Verfahren stoffschlüssige Verbindungen hergestellt werden.

Bei der Stoßkante handelt es sich also um eine der Seitenflächen des Bahnkörpers, deren eine Raumausdehnung die Dicke ist, keinesfalls um eine der Seitenflächen des Bahnkörpers, deren Fläche durch die Länge und die Breite des Bahnkörpers bestimmt ist.

Unter "im Wesentlichen eben" im Sinne der vorliegenden Erfindung wird verstanden, dass die maximale lineare Ausdehnung der Einbuchtungen oder Ausbuchtungen aus der Ebene des Rechtecks senkrecht in die bzw. aus Ebene höchstens 20 µm, bevorzugt höchstens 15 µm, besonders bevorzugt höchstens 10 µm %, ganz besonders bevorzugt höchstens 5 µm der Höhe des Rechtecks nicht übersteigt.

Im Sinne der vorliegenden Erfindung bedeutet "dass die Bahnköper nach der Verschweißung keine Unebenheiten oder Verdickungen aufweisen", dass die Dicke des Bahnkörpers an der Schweißverbindung maximal um 20 %, bevorzugt maximal um 15 %, besonders bevorzugt maximal um 10 %, ganz besonders bevorzugt maximal um 5 % von der Dicke des Bahnkörpers außerhalb der Schweißverbindung abweicht.

Die Vorratsbahn, von der die Bahnstücke wie beispielsweise in EP 2 631 049 A1 offenbart abgeschnitten werden, hat eine Länge von Länge von 100 bis zu 3000 m, für die fertige Halbzeugbahn gilt entsprechendes. Die Bahnstücke haben eine Länge von 60 bis 2100 mm, bevorzugt von 500 bis 1000 mm. Für die Breite gilt entsprechendes, wobei die Länge und die Breite eines Bahnkörpers gleich oder unterschiedlich sein können.

Vorzugsweise hat die große Fläche eines Bahnkörper dabei die Form eines Parallelogramms, insbesondere eines Rechtecks, ganz insbesondere die Form eines Quadrats.

Die Vorratsbahn, und damit auch die Bahnstücke und die fertige Halbzeugbahn, haben eine Matrix, die zu mindestens 50 Gew.-%, bevorzugt mindestens 70 Gew.-%, besonders bevorzugt zu mindestens 90 Gew.-%, ganz besonders bevorzugt mindestens 95 Gew.-%, insbesondere zu mindestens 97 Gew.-%, aus einem auf Polycarbonat basierenden Thermoplasten besteht.

Wenn von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht das Polycarbonat zu 70 Gew.-%, bevorzugt zu 80 Gew.-%, besonders bevorzugt zu 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertné, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3 '-Bis-(4-hydroxyphenyl)-phthalimide, wie 2-Butyl-3,3 '-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5- dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich können optional bezogen auf das Gewicht des Thermoplasten bis zu 50,0 Gew.-%, bevorzugt 0,1 bis 40 Gew.-%, besonders bevorzugt 0,2 bis 30,0 Gew .-%, sonstige übliche Additive enthalten sein.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Allgemein kann es sinnvoll sein, dem Polycarbonat, das für die Matrix verwendet wird, Thermostabilisatoren und Fließverbesserer zuzusetzen, sofern diese nicht das Molekulargewicht des Polycarbonats verringern und/oder die Vikat-Temperatur erniedrigen.

Als Fasern werden erfindungsgemäß insbesondere Naturfasern oder künstlich hergestellte Fasern oder eine Mischung aus beiden eingesetzt. Dabei sind die Naturfasern vorzugsweise faserförmige Minerale oder pflanzliche Fasern und die künstlich hergestellten Fasern vorzugsweise anorganische Synthesefasern oder organische Synthesefasern. Erfindungsgemäß bevorzugt sind Glas-, Carbon-, oder Polymerfasern, wiederum bevorzugt Glas- oder Carbonfasern.

Ganz besonders bevorzugt sind Glasfasern oder Carbonfasern mit einem E-Modul von größer 240 GPa, bevorzugt größer 245 GPa, besonders bevorzugt von 250 GPa oder mehr einzusetzen. Insbesondere sind Carbonfasern mit diesen Eigenschaften bevorzugt. Solche Carbonfasern sind beispielsweise unter der Bezeichnung Pyrofil von der Firma Mitsubishi Rayon CO., LtD. im Handel erhältlich.

Der Volumengehalt der Fasern in den Bahnkörpern beträgt gemittelt über das Volumen des jeweiligen Bahnkörpers von 20 bis 80 Vol.-%, bevorzugt von 30 bis 70 Vol.-% besonders bevorzugt von 40 bis 60 Vol.-%, ganz besonders bevorzugt von 45 bis 55 Vol.-%.

Wie bereits weiter oben beschrieben ist es erfindungsgemäß vorteilhaft, dass die Bereiche der Bahnkörper, die miteinander verschweißt werden, also miteinander die Schweißverbindung eingehen, einen geringeren Gehalt an Fasern aufweisen, als die übrigen Bereiche der Bahnkörper. Bevorzugt weisen die Bereiche der Bahnkörper, die miteinander verschweißt werden, die Hälfte oder weniger, besonders bevorzugt ein Fünftel oder weniger, ganz besonders bevorzugt ein Zehntel oder weniger, insbesondere ein Hundertstel oder weniger des Fasergehalts der übrigen Bereiche der Bahnkörper auf. Diese Bereiche der Bahnkörper, die miteinander verschweißt werden, werden auch Schmelzbereiche genannt. In diesen Bereichen steht dann genug schmelzbares Material zur Verfügung, um eine stoffschlüssige Verbindung herzustellen.

Naturgemäß liegt dieser Schmelzbereich an der Oberfläche des Bahnkörpers. Vorzugsweise liegen die Schmelzbereiche im Bereich der Stoßkanten und erstrecken sich wiederum vorzugsweise über die gesamte Stoßkante.

Wie bereits weiter oben beschrieben ist ein Schmelzbereich 0,1 mm bis 3 mm, bevorzugt 0,2 mm bis 2 mm, besonders bevorzugt 0,5 mm bis 1 mm tief, gemessen senkrecht zur Stoßkante in den Bahnkörper hinein.

So kann eine stoffschlüssige Verbindung auch bei Ultraschallschweißen sicher gewährleistet werden, ohne dass sich die zu verschweißenden Bahnkörper überlappen müssen. Im Gegenteil, eine Überlappung der zu verschweißenden Bahnkörper wird vermieden.

Erfindungsgemäß bevorzugt ist es auch, dass die Bahnkörper beim Verschweißen mit den Stoßkanten gegeneinander geführt, vorzugsweise gedrückt werden, so dass die beiden gegenüberliegenden Stoßkanten unmittelbar gegeneinander liegen und vorzugsweise gegenseitig Druck aufeinander ausüben. Dieses Gegeneinanderführen, vorzugsweise Gegeneinanderdrücken, kann apparativ-mechanisch, beispielsweise durch eine Zuführeinrichtung und/oder einen Niederhalter, oder im einfachsten Fall manuell erfolgen.

Bei einer erfindungsgemäßen Ausgestaltung des Verfahrens werden die auf Stoß nebeneinander angeordneten Bahnkörper zwischen der Sonotrode und dem Amboss angeordnet und mit einem Niederhalter fixiert. Sonotrode und Amboss werden zwischen zwei Linearachsen geführt, die parallel zueinander angeordnet sind. Sonotrode und Amboss werden möglichst exakt entlang den gegeneinander liegenden Stoßkanten geführt, wobei die Breite der Sonotrode mindestens die Schmelzbereiche beider Bahnkörper überdeckt. Bevorzugt ist die Sonotrode mindestens 10 %, bevorzugt mindestens 50 %, besonders bevorzugt mindestens 100 % breiter als die Summe der Breite der Schmelzbereiche beider Bahnkörper.

Mit dem Verfahren können Vorschubgeschwindigkeiten von 1 bis 30 m pro Minute, bevorzugt 5 bis 15 m pro Minute erreicht werden.

Offenbart wird hier auch eine Vorrichtung zur Durchführung des erfindungsgemäßen Verfahrens zum Verbinden von zwei mit Fasern verstärkten Bahnkörpern durch Ultraschallschweißen, wobei die Vorrichtung folgende Komponenten aufweist:
(A) eine Zuführeinrichtung,
(B) eine Sonotrode,
(C) einen Amboss,

Dabei ist es vorteilhaft, dass die Sonotrode als Rollnaht-Sonotrode ausgestaltet ist, vorzugsweise als glatte, nicht profilierte Sonotrode. Dieser Vorteil kann noch dadurch erhöht werden, wenn der zugehörige Amboss als Ambossrad oder Ambosswalze ausgeführt ist. Damit können auch Bahnkörper mit langen Stoßkanten mit hohen Vorschubgeschwindigkeiten verschweißt werden.

Alternativ kann die Sonotrode eine Rändelung an der gekrümmten Oberfläche aufweisen, also der Oberfläche, die die Halbzeugbahn berührt. Diese Rändelung erstreckt sich vorzugsweise über die gesamte gekrümmte Oberfläche der Sonotrode. Bevorzugt hat diese Rändelung eine Tiefe von 0,01 bis 5 mm, besonders bevorzugt von 0,1 bis 2 mm. Außerdem bevorzugt ist die Rändelung in einem Winkel von 30 bis 150°, bevorzugt 60 bis 120°, besonders bevorzugt von 75 bis 105° zur Laufrichtung der Halbzeugbahn ausgerichtet. Die Rändelung kann dabei beispielsweise in Form einer Links-Rechts-Rändelung vorliegen.

Sonotrode und Amboss sind so als Paarung angeordnet, dass sie Druck auf die zu verschweißenden Bahnkörper ausübt, und zwar im Schmelzbereich zwischen den zu verschweißenden Bahnkörpern und senkrecht zu den Stoßkanten der Bahnkörper. Dies stellt sicher, dass die Bahnkörper stoffschlüssig miteinander verbunden werden können, ohne dass die Bahnköper einander überlappen.

Vorzugsweise weist die Vorrichtung zwischen der Zuführeinrichtung und der Sonotrode noch zwei Linearachsen zur Führung der miteinander zu verschweißenden Bahnkörper auf. Auch ist es bevorzugt, dass die Vorrichtung alternativ oder zusätzlich zu den zwei Linearachsen vor der Sonotrode einen Niederhalter aufweist.

Bei hohen Vorschubgeschwindigkeiten wie den genannten 1 bis 30 m pro Minute, bevorzugt 5 bis 15 m pro Minute, ist es vorteilhaft, wenn die Vorrichtung eine nachlaufende Presswalze aufweist, da der Schmelzbereich nach der Schweißung bei den hohen Vorschubgeschwindigkeiten oftmals nicht schnell genug abkühlt und daher nicht sofort die nötige Festigkeit für eine haltbare stoffschlüssige Verbindung liefert. Die Presswalze fixiert die miteinander verschweißten Bahnkörper lokal in ihrer Form und gibt ihnen dadurch genügend Zeit zur Abkühlung und Herstellen der nötigen Festigkeit. Dies stellt zusätzlich sicher, dass die Bahnkörper stoffschlüssig miteinander verbunden werden können, ohne dass die Bahnköper einander überlappen.

Um die Schweißung entlang von längeren Stoßkanten schnell und effizient durchführen zu können, kann es außerdem vorteilhaft sein, dass die Vorrichtung zwei, drei, vier, fünf oder mehr Sonotroden aufweist, wobei die Sonotroden in deren Rollrichtung entlang der Fügezone hintereinander angeordnet sein können. Die Vorrichtung weist dann eine der Anzahl der Sonotroden entsprechende Anzahl von Ambossrädern und vorzugsweise auch eine entsprechende Anzahl von nachlaufenden Presswalzen auf. Alternativ können die Ambossräder auch ganz oder teilweise durch ein oder mehrere Ambosswalzen ersetzt werden.

Weist die Vorrichtung mehr als eine Sonotrode auf, können alle Sonotroden eine glatte oder alle Sonotrode eine gerändelte Oberfläche aufweisen, oder ein Teil der Sonotroden weist eine glatte und ein anderer Teil der Sonotroden weist eine gerändelte Oberfläche auf.

Gegenstand der vorliegenden Erfindung ist auch ein mit Fasern verstärkter Bahnkörper, der eine Matrix aufweist, die einen oder mehrere Thermoplasten umfasst, und der mindestens einen Schmelzbereich aufweist, also einen Bereich, der einen geringeren Gehalt an Fasern aufweist, als die übrigen Bereiche des Bahnkörpers, bevorzugt die Hälfte oder weniger, besonders bevorzugt ein Fünftel oder weniger, ganz besonders bevorzugt ein Zehntel oder weniger, insbesondere ein Hundertstel oder weniger des Fasergehalts der übrigen Bereiche des Bahnkörpers, wobei die Schmelzbereiche im Bereich der Stoßkanten liegen und 0,1 mm bis 3 mm, bevorzugt 0,2 mm bis 2 mm, besonders bevorzugt 0,5 mm bis 1 mm tief sind, gemessen senkrecht zur Stoßkante in den Bahnkörper hinein.

Die Fasern können dabei in Form von Geweben, Gestricken, Gewirken, mehrlagige Gelegen Non-wovens (z.B. Vliese, Wirrfasermatten etc.), uni- oder multidirektional ausgerichteten Endlosfasern oder zufällig verteilten Kurzfasern in der Matrix vorliegen. Bevorzugt liegen die Fasern in Form von unidirektional ausgerichteten Endlosfasern vor.

Unter "Endlosfaser" wird verstanden, dass die Länge der Faser im Wesentlichen der Abmessung des zu verstärkenden Bahnkörpers in der Ausrichtung der Faser entspricht. Unter "unidirektional" im Zusammenhang mit "Faser" wird verstanden, dass die Fasern im Bahnkörper in nur einer Richtung ausgerichtet sind.

Der Bahnkörper kann eine Vorratsbahn, ein Bahnstück oder eine fertige Halbzeugbahn sein, wobei dieser Bahnkörper die in der vorstehenden Beschreibung aufgeführten Merkmale aufweist.

Vorzugsweise weist der Bahnkörper mindestens zwei Schmelzbereiche auf. Hat der Bahnkörper mindestens zwei Schmelzbereiche, dann sind diese vorzugsweise so ausgerichtet, dass mindestens zwei davon parallel zueinander liegen. Auf diese Weise kann durch gleichzeitiges oder nacheinander erfolgendes Verschweißen von Bahnstücken untereinander oder Verschweißen eines Bahnstücks mit dem Ende einer fertigen Halbzeugbahn diese hergestellt und verlängert werden.

Der Bahnkörper kann jedoch auch drei, vier, fünf, sechs oder mehr Schmelzbereiche aufweisen. Dies hängt beispielsweise auch von der Form des Bahnkörpers ab. So hat ein Bahnkörper in Form eines Parallelogramms vorzugsweise zwei oder vier Schmelzbereiche, wiederum vorzugsweise zwei. Ein Bahnkörper in Form eines Sechsecks kann auch sechs Schmelzbereiche haben; im Falle von gleichseitigen Sechsecken kann mit diesen ein aus mehreren mittels Ultraschallschweißen ein Bahnkörper hergestellt werden, der eine größere Fläche lückenlos abdeckt.

Beispielsweise entsprächen bei einer Vorratsbahn gemäß EP 2 631 049 A1 die Schmelzbereiche vorzugsweise den zwei parallel zueinander liegenden Außenseiten. Von dieser Vorratsbahn werden dann Bahnstücke, in der EP 2 631 049 A1 Segmente genannt, abgeschnitten; diese Bahnstücke haben dann folglich auch zwei Schmelzbereiche. Dadurch dass die Bahnstücke dann in einer anderen Richtung als der ursprünglichen Vorschubrichtung weitertransportiert werden, ohne dass die Bahnstücke selbst ihre ursprüngliche Ausrichtung ändern, liegen bei den Bahnstücken die Schmelzbereiche nun so, dass die Schmelzbereiche von zwei Bahnstücken oder von einem Bahnstück und dem Ende der fertigen Halbzeugbahn parallel und bündig gegenüber angeordnet sind. Das Ende der fertigen Halbzeugbahn weist dann nur einen Schmelzbereich auf, der dem Schmelzbereich eines Bahnstücks bündig gegenüber angeordnet ist.

Gegenstand der vorliegenden Erfindung ist auch die Verwendung von erfindungsgemäßen Bahnkörpern in der Ausgestaltung von Bahnstücken zur Herstellung von mit Fasern verstärkten fertigen Bahnen mittels Ultraschallschweißen.

Mit solchen Bahnen ist es möglich, einen Mehrschichtverbundwerkstoff herzustellen, der eine ästhetisch ansprechende Oberfläche mit geringer Welligkeit mit gleichzeitig guten mechanischen Eigenschaften aufweist. So ein aus Bahnkörpern mit Polycarbonat als Matrixmaterial aufgebauter Mehrschichtverbundwerkstoff weist eine metallähnliche Haptik, Optik und Akustik auf und ist daher auch als Gehäusematerial für Gehäuse für elektronische Geräte, insbesondere portable elektronische Geräte wie Laptops oder Smartphones, für die Außenbeplankung sowie für Interieurblenden von Automobilen und geeignet, da ein solcher Mehrschichtverbundwerkstoff sowohl mechanische Last aufnehmen kann als auch ein hervorragendes äußeres Erscheinungsbild bietet. Dabei kann der Mehrschichtverbundwerkstoff aus zwei, drei, vier, fünf sechs oder mehr Bahnkörpern hergestellt sein.

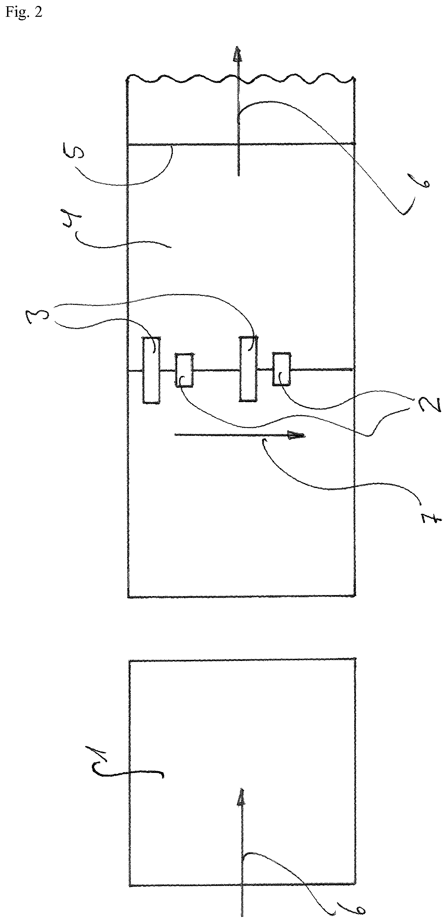

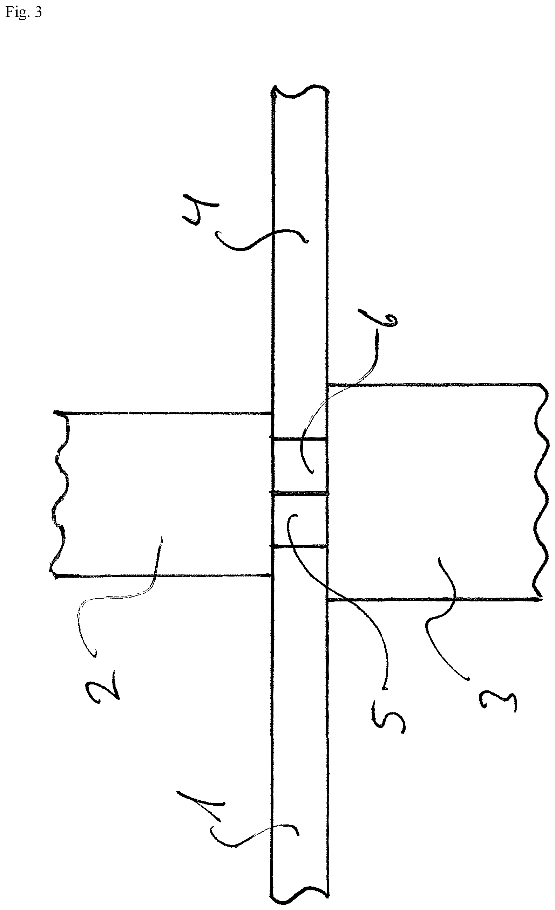

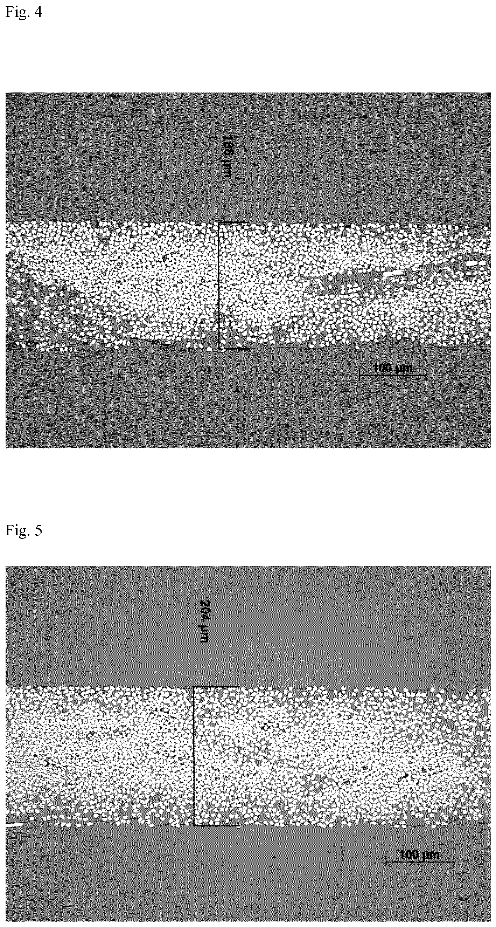

Bevorzugte Ausgestaltungen der Erfindung werden durch die nachfolgenden Figuren dargestellt, ohne dass die Erfindung dadurch auf diese Ausgestaltungen beschränkt wird. Es zeigen:

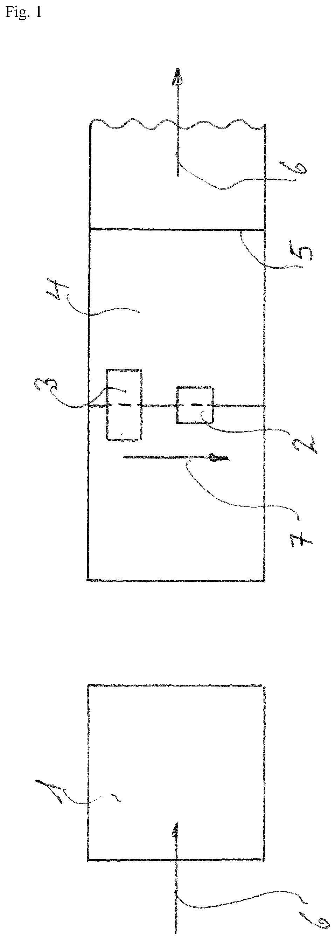

Fig. 1: Eine Aufsicht auf die Vorrichtung zur Durchführung des erfindungsgemäßen Verfahrens zum Verbinden von zwei mit Fasern verstärkten Bahnkörpern durch Ultraschallschweißen mit nur einer Sonotrode; dabei sind:
   1 Bahnteilstück
   2 Rollnahtsonotrode
   3 Presswalze
   4 fertige Halbzeugbahn
   5 Schweißverbindung
   6 Vorschubrichtung des Bahnkörpers und der fertigen Halbzeugbahn
   7 Arbeitsrichtung der Rollnahtsonostrode und der Presswalze beim Ultraschallschweißvorgang
Fig. 2: Eine Aufsicht auf die Vorrichtung zur Durchführung des erfindungsgemäßen Verfahrens zum Verbinden von zwei mit Fasern verstärkten Bahnkörpern durch Ultraschallschweißen mit zwei Sonotroden; dabei sind:
   1 Bahnteilstück
   2 Rollnahtsonotroden
   3 Presswalzen
   4 fertige Halbzeugbahn
   5 Schweißverbindung
   6 Vorschubrichtung des Bahnkörpers und der fertigen Halbzeugbahn
   7 Arbeitsrichtung der Rollnahtsonostroden und der Presswalzen beim Ultraschallschweißvorgang
Fig. 3: Eine Seitenansicht auf die Vorrichtung zur Durchführung des erfindungsgemäßen Verfahrens zum Verbinden von zwei mit Fasern verstärkten Bahnkörpern durch Ultraschallschweißen; dabei sind:
   1 Bahnteilstück
   2 Rollnahtsonotrode
   3 Ambosswalze
   4 fertige Halbzeugbahn
   5 Schmelzbereich des Bahnteilstücks
   6 Schmelzbereich der fertigen Halbzeugbahn
Fig. 4 zeigt eine durch Auflichtmikroskopie, Hellfeld, gewonnene Abbildung eines Schnitts durch eine mit Fasern verstärkte Halbzeugbahn im Bereich der Schweißverbindung, wobei die Dicke mit 186 µm gemessen wurde.
Fig. 5 zeigt eine durch Auflichtmikroskopie, Hellfeld, gewonnene Abbildung eines Schnitts durch die gleiche mit Fasern verstärkte Halbzeugbahn wie in Fig. 5, jedoch außerhalb Bereich der Schweißverbindung, wobei die Dicke der Halbzeugbahn mit 204 µm gemessen wurde.

## Patentansprüche

1. Verfahren zum Verbinden von zwei mit unidirektional ausgerichteten Endlosfasern verstärkten Bahnkörpern (1) durch Ultraschallschweißen, wobei die Fasern in einer Matrix aus Polycarbonat eingebettet sind und die Bahnkörper (1) Stoßkanten aufweisen, die im Wesentlichen rechteckig und im Wesentlichen eben sind, **gekennzeichnet durch** folgende Schritte:
(1) Anordnen der Bahnkörper (1) im Bereich der Stoßkanten auf Stoß nebeneinander in einer Schweißvorrichtung zwischen einer Sonotrode (2) und einem Amboss (3),
(2) Verschweißen der Bahnkörper (1) mittels Ultraschall, wobei die Sonotrode (2) und der Amboss (3) im Schmelzbereich (5) zwischen den Bahnköpern (1) und senkrecht zu den Stoßkanten der Bahnkörper (1) Druck auf die zu verschweißenden Bahnkörper ausüben,
(3) Entfernen der miteinander verschweißten Bahnkörper (4) aus der Schweißvorrichtung,
**dadurch gekennzeichnet, dass**
die Bereiche der Bahnkörper (1), die miteinander verschweißt werden, einen geringeren Gehalt an Fasern aufweisen, als die übrigen Bereiche der Bahnkörper (1), wobei die Bereiche der Bahnkörper (1), die miteinander verschweißt werden, bevorzugt die Hälfte oder weniger, besonders bevorzugt ein Fünftel oder weniger, ganz besonders bevorzugt ein Zehntel oder weniger, insbesondere ein Hundertstel oder weniger des Fasergehalts der übrigen Bereiche der Bahnkörper (1) aufweisen und die Bereiche der Bahnkörper (1), die miteinander verschweißt werden, im Bereich der Stoßkanten liegen und 0,1 mm bis 3 mm, bevorzugt 0,2 mm bis 2 mm, besonders bevorzugt 0,5 mm bis 1 mm tief sind, gemessen senkrecht zur Stoßkante in den Bahnkörper (1) hinein.

2. Verfahren nach Anspruch 1, **dadurch gekennzeichnet, dass** eine nachlaufende Presswalze (3) die miteinander verschweißten Bahnkörper (1) lokal in ihrer Form fixiert.

3. Verfahren nach Anspruch 1, **dadurch gekennzeichnet, dass** als Fasern Naturfasern oder künstlich hergestellte Fasern oder eine Mischung aus beiden eingesetzt wird.

4. Verfahren nach Anspruch 3, **dadurch gekennzeichnet, dass** die Naturfasern faserförmige Minerale oder pflanzliche Fasern sind und dass die künstlich hergestellten Fasern anorganische Synthesefasern oder organische Synthesefasern sind, bevorzugt Glas-, Carbon-, oder Polymerfasern, wiederum bevorzugt Glas- oder Carbonfasern.

5. Verfahren nach Anspruch 1, **dadurch gekennzeichnet, dass** der Volumengehalt der Fasern in den Bahnkörpern jeweils von 20 bis 80 Vol.-%, bevorzugt von 30 bis 70 Vol.-%, besonders bevorzugt von 40 bis 60 Vol.-%, ganz besonders bevorzugt von 45 bis 55 Vol.-% beträgt.

6. Bahnkörper, hergestellt nach einem Verfahren nach einem der Ansprüche 1 bis 5, **dadurch gekennzeichnet, dass** die Dicke des Bahnkörpers (1) an der Schweißverbindung (5) maximal um 20 %, bevorzugt maximal um 15 %, besonders bevorzugt maximal um 10 %, ganz besonders bevorzugt maximal um 5 % von der Dicke des Bahnkörpers außerhalb der Schweißverbindung (5) abweicht.

7. Mit unidirektional ausgerichteten Endlosfasern verstärkter Bahnkörper (1), der eine Matrix aus Polycarbonat aufweist, **dadurch gekennzeichnet, dass** der Bahnkörper mindestens einen Bereich als Schmelzbereich (5) aufweist, der einen geringeren Gehalt an Fasern aufweist, als die übrigen Bereiche des Bahnkörpers (1), wobei der Gehalt an Fasern im Schmelzbereich bevorzugt die Hälfte oder weniger, besonders bevorzugt ein Fünftel oder weniger, ganz besonders bevorzugt ein Zehntel oder weniger, insbesondere ein Hundertstel oder weniger des Fasergehalts der übrigen Bereiche des Bahnkörpers (1) beträgt, wobei die Schmelzbereiche (5) im Bereich der Stoßkanten liegen und 0,1 mm bis 3 mm, bevorzugt 0,2 mm bis 2 mm, besonders bevorzugt 0,5 mm bis 1 mm tief sind, gemessen senkrecht zur Stoßkante in den Bahnkörper (1) hinein.

8. Verwendung eines Bahnkörpers (1) nach Anspruch 6 oder nach Anspruch 7in der Ausgestaltung eines Bahnstücks (1) zur Herstellung von mit Fasern verstärkten fertigen Bahnen (4) mittels Ultraschallschweißen.

9. Mehrschichtverbundwerkstoff, **dadurch gekennzeichnet, dass** er aufgebaut ist aus zwei oder mehr Bahnkörpern (1) nach Anspruch 6 oder nach Anspruch 7.

10. Verwendung eines Mehrschichtverbundwerkstoffs nach Anspruch 9 als Gehäusematerial für Gehäuse für elektronische Geräte, insbesondere portable elektronische Geräte wie Laptops oder Smartphones, für die Außenbeplankung sowie für Interieurblenden von Automobilen.

## Claims

1. Process for joining two sheeting articles (1) reinforced with unidirectionally aligned endless fibres by ultrasonic welding, wherein the fibres are embedded in a matrix of polycarbonate and the sheeting articles (1) have abutting ends that are substantially rectangular and substantially even, **characterized by** the steps of:
(1)arranging the sheeting articles (1) next to one another end-to-end in the region of the abutting ends in a welding apparatus between a sonotrode (2) and an anvil (3),
(2)welding the sheeting articles (1) by means of ultrasound, wherein the sonotrode (2) and the anvil (3) exert pressure on the to-be-welded sheeting articles in the melting region (5) between the sheeting articles (1) and perpendicularly to the abutting ends of the sheeting articles (1),
(3)removing the sheeting articles that are welded to one another (4) from the welding apparatus,
**characterized in that** regions of the sheeting articles (1) that are welded to one another have a lower content of fibres than the remaining regions of the sheeting articles (1), wherein the regions of the sheeting articles (1) that are welded to one another preferably have one half or less, particularly preferably one fifth or less, very particularly preferably one tenth or less, in particular one hundredth or less, of the fibre content of the remaining regions of the sheeting articles (1) and the regions of the sheeting articles (1) that are welded to one another are in the region of the abutting ends and are 0.1 mm to 3 mm, preferably 0.2 mm to 2 mm, particularly preferably 0.5 mm to 1 mm, deep measured perpendicularly to the abutting end inwards into the sheeting article (1) .

2. Process according to Claim 1, **characterized in that** the sheeting articles (1) that have been welded to one another are locally fixed in their shape by a following press roll (3).

3. Process according to Claim 1, **characterized in that** the fibres employed are natural fibres or man-made fibres or a mixture of both.

4. Process according to Claim 3, **characterized in that** the natural fibres are fibrous mineral or vegetable fibres and that the man-made fibres are inorganic synthetic fibres or organic synthetic fibres, preferably glass, carbon or polymer fibres, preferably in turn glass or carbon fibres.

5. Process according to Claim 1, **characterized in that** the volume content of the fibres in the sheeting articles is respectively from 20 to 80 vol%, preferably from 30 to 70 vol%, particularly preferably from 40 to 60 vol%, very particularly preferably from 45 to 55 vol%.

6. Sheeting article produced by a process according to any of Claims 1 to 5, **characterized in that** the thickness of the sheeting article (1) at the weld join (5) deviates from the thickness of the sheeting article outside the weld join (5) by not more than 20%, preferably by not more than 15%, particularly preferably by not more than 10%, very particularly preferably by not more than 5%.

7. Sheeting article (1) reinforced with unidirectionally aligned endless fibres which comprises a matrix of polycarbonate, **characterized in that** the sheeting article comprises at least one region as a melting region (5) which has a lower content of fibres than the remaining regions of the sheeting article (1), wherein the content of fibres in the melting region is preferably one half or less, particularly preferably one fifth or less, very particularly preferably one tenth or less, in particular one hundredth or less, of the fibre content of the remaining regions of the sheeting article (1), wherein the melting regions (5) are in the region of the abutting ends and are 0.1 mm to 3 mm, preferably 0.2 mm to 2 mm, particularly preferably 0.5 mm to 1 mm, deep measured perpendicularly to the abutting end inwards into the sheeting article (1).

8. Use of a sheeting article (1) according to Claim 6 or according to Claim 7 in the configuration of a sheeting piece (1) for producing fibre-reinforced final sheetings (4) by means of ultrasonic welding.

9. Multilayer composite, **characterized in that** it is constructed from two or more sheeting articles (1) according to Claim 6 or Claim 7.

10. Use of a multilayer composite according to Claim 9 as a housing material for housings for electronic devices, in particular portable electronic devices such as laptops or smartphones and for exterior and interior trim of automobiles.

## Revendications

1. Procédé de liaison de deux corps de bande (1) renforcés par des fibres sans fin orientées de manière unidirectionnelle par soudure par ultrasons, les fibres étant incorporées dans une matrice de polycarbonate et les corps de bande (1) présentant des arêtes de joint qui sont essentiellement à angle droit et qui sont essentiellement planes, **caractérisé par** les étapes suivantes :
(1) disposition des corps de bande (1) dans la zone des arêtes de joint bord à bord l'un à côté de l'autre dans un dispositif de soudure entre une sonotrode (2) et une enclume (3),
(2) soudure des corps de bande (1) au moyen d'ultrasons, la sonotrode (2) et l'enclume (3) exerçant une pression sur les corps de bande à souder dans la zone de fusion (5) entre les corps de bande (1) et perpendiculairement aux arêtes de joint des corps de bande (1),
(3) élimination des corps de bande soudés l'un avec l'autre (4) du dispositif de soudure,
**caractérisé en ce que**
les zones des corps de bande (1) qui sont soudées ensemble présentent une teneur plus réduite en fibres que les autres zones des corps de bande (1), les zones des corps de bande (1) qui sont soudées ensemble présentant préférablement la moitié ou moins, particulièrement préférablement un cinquième ou moins, tout particulièrement préférablement un dixième ou moins, en particulier un centième ou moins de la teneur en fibres des autres zones des corps de bande (1) et les zones des corps de bande (1) qui sont soudées ensemble se situant dans la zone des arêtes de joint et étant d'une profondeur de 0,1 mm à 3 mm, préférablement de 0,2 mm à 2 mm, particulièrement préférablement de 0,5 mm à 1 mm, mesurée perpendiculairement à l'arête de joint dans les corps de bande (1).

2. Procédé selon la revendication 1, **caractérisé en ce qu'**un rouleau presseur (3) situé en aval immobilise localement sous leur forme les corps de bande (1) soudés ensemble.

3. Procédé selon la revendication 1, **caractérisé en ce que** des fibres naturelles ou des fibres préparées artificiellement ou un mélange des deux sont utilisées/est utilisé comme fibres.

4. Procédé selon la revendication 3, **caractérisé en ce que** les fibres naturelles sont des minéraux en forme de fibres ou des fibres végétales et **en ce que** les fibres préparées artificiellement sont des fibres de synthèse inorganiques ou des fibres de synthèse organiques, préférablement des fibres de verre, des fibres de carbone ou des fibres de polymère, plus préférablement des fibres de verre ou des fibres de carbone.

5. Procédé selon la revendication 1, **caractérisé en ce que** la teneur en volume des fibres dans les corps de bande est à chaque fois de 20 à 80 % en volume, préférablement de 30 à 70 % en volume, particulièrement préférablement de 40 à 60 % en volume, tout particulièrement préférablement de 45 à 55 % en volume.

6. Corps de bande, préparé selon un procédé selon l'une quelconque des revendications 1 à 5, **caractérisé en ce que** l'épaisseur du corps de bande (1) au niveau de la liaison soudée (5) diffère de maximum 20 %, préférablement de maximum 15 %, particulièrement préférablement de maximum 10 %, tout particulièrement préférablement de maximum 5 % de l'épaisseur du corps de bande en dehors de la liaison soudée (5).

7. Corps de bande (1) renforcé par des fibres sans fin orientées de manière unidirectionnelle, qui présente une matrice de polycarbonate, **caractérisé en ce que** le corps de bande présente au moins une zone en tant que zone de fusion (5), qui présente une teneur plus faible en fibres que les autres zones du corps de bande (1), la teneur en fibres dans la zone de fusion étant préférablement la moitié ou moins, particulièrement préférablement un cinquième ou moins, tout particulièrement préférablement un dixième ou moins, en particulier un centième ou moins de la teneur en fibres des autres zones du corps de bande (1), les zones de fusion (5) se situant dans la zone des arêtes de joint et étant d'une profondeur de 0,1 mm à 3 mm, préférablement de 0,2 mm à 2 mm, particulièrement préférablement de 0,5 mm à 1 mm, mesurée perpendiculairement à l'arête de joint dans les corps de bande (1).

8. Utilisation d'un corps de bande (1) selon la revendication 6 ou selon la revendication 7 dans l'élaboration d'une pièce de bande (1) pour la préparation de bandes (4) fabriquées renforcées par des fibres au moyen d'une soudure par ultrasons.

9. Matériau composite multicouche, **caractérisé en ce qu'**il est construit à partir de deux corps de bande (1) ou plus selon la revendication 6 ou selon la revendication 7.

10. Utilisation d'un matériau composite multicouche selon la revendication 9 en tant que matériau de boîtier pour des boîtiers pour des appareils électroniques, en particulier des appareils électroniques portables comme des ordinateurs portables ou des smartphones, pour le revêtement extérieur ainsi que pour des inserts intérieurs d'automobiles.
